# EUROPEAN PATENT APPLICATION

(11) **EP 4 835 680 A1**
(43) Date of publication of application: **04.11.2026**
(21) Application number: 24911358.0
(22) Date of filing: 26.12.2024
(51) Int. Cl.: G06F 15/16, H04L 45/24

(54) **MULTIPATH REDUNDANT COMMUNICATION METHOD AND APPARATUS, ELECTRONIC DEVICE, AND STORAGE MEDIUM**

(30) Priority: 27.12.2023 CN 202311826748
(71) Applicant: Beijing Co Wheels Technology Co., Ltd, Beijing 101300 (CN)
(72) Inventor: TAN, Longyuan, Beijing 101300 (CN)
(74) Representative: 2SPL Patentanwälte PartG mbB
(86) International application number: PCT/CN2024/142836
(87) International publication number: WO 2025/140437

(57) **Abstract**

The present invention relates to a multipath redundant communication method and apparatus, an electronic device, and a storage medium. The method comprises: in response to a topic subscription sent by a subscriber application, obtaining service data corresponding to the topic subscription and at least two communication links configured on the basis of a DDS adjustment protocol; encapsulating the service data on the basis of a DDS adjustment protocol to obtain target data packets corresponding to the at least two communication links; and respectively sending the plurality of target data packets to the subscriber application by means of the at least two communication links. In the above process, the reliability of data transmission based on a DDS adjustment protocol is improved.

## Description

### CROSS-REFERENCE TO RELATED APPLICATIONS

The present application claims priority to Chinese patent application No. 202311826748.2, entitled "MULTI-CHANNEL REDUNDANT COMMUNICATION METHOD AND APPARATUS, ELECTRONIC DEVICE AND STORAGE MEDIUM", filed before the China National Intellectual Property Administration (CNIPA) on December 27, 2023, the entire contents of which are incorporated herein by reference.

### TECHNICAL FIELD

The present application relates to the field of communication technologies, in particular to a multi-channel redundant communication method and apparatus, an electronic device and a storage medium.

### BACKGROUND

In network communications, the Data Distribution Service (DDS) protocol can be adopted to implement communication. DDS is a data-centric connectivity service that provides real-time, efficient and flexible data distribution while ensuring data integrity, thus meeting the requirements of various distributed real-time communication applications. However, the reliability of data transmission based on the DDS protocol remains relatively low.

### SUMMARY

To solve the above technical problem, the present disclosure provides a multi-channel redundant communication method and apparatus, an electronic device and a storage medium.

In a first aspect, embodiments of the present disclosure provide a multi-channel redundant communication method, including:
in response to a topic subscription sent by a subscriber application, acquiring service data corresponding to the topic subscription and at least two communication links configured based on a DDS-adapted protocol;
encapsulating the service data according to the DDS-adapted protocol to obtain target data packets corresponding to the at least two communication links; and
transmitting the target data packets to the subscriber application via the at least two communication links respectively.

Optionally, the target data packets each include multiple target sub-data packets, the encapsulating the service data according to the DDS-adapted protocol to obtain target data packets corresponding to the at least two communication links includes:
dividing the service data into multiple pieces of sub-service data; and
encapsulating the multiple pieces of sub-service data according to the DDS-adapted protocol to obtain the target data packets each including the multiple target sub-data packets, wherein the multiple pieces of sub-service data and the target sub-data packets are in one-to-one correspondence.

Optionally, the DDS-adapted protocol includes sequence number parameters; the encapsulating the multiple pieces of sub-service data according to the DDS-adapted protocol to obtain the target data packets each comprising the multiple target sub-data packets includes:
numbering the multiple pieces of sub-service data to obtain data sequence numbers, taking the data sequence numbers as the sequence number parameters, taking the multiple pieces of sub-service data as payload data in the DDS-adapted protocol, and performing encapsulation to obtain the multiple target sub-data packets corresponding to the multiple pieces of sub-service data.

Optionally, the at least two communication links are pre-configured according to first address information of a target publisher application and second address information of the subscriber application before the topic subscription is received from the subscriber application.

Optionally, the first address information includes at least two source addresses, and the second address information comprises at least two destination addresses;
the at least two communication links is pre-configured according to the first address information of the target publisher application and the second address information of the subscriber application by:
determining destination addresses corresponding to the at least two source addresses to obtain the at least two communication links.

Optionally, the dividing the service data into the multiple pieces of sub-service data includes:
determining first sub-service data in the service data according to a target service type; and
dividing the service data into multiple pieces of sub-service data, wherein the sub-service data includes the first sub-service data and second sub-service data, the second sub-service data comprises data in the service data other than the first sub-service data.

Optionally, the transmitting the target data packets to the subscriber application via the at least two communication links respectively includes:
transmitting multiple first target sub-data packets corresponding to multiple pieces of first sub-service data to the subscriber application respectively via all of the at least two communication links; and
transmitting a second target sub-data packet corresponding to the second sub-service data to the subscriber application via one of the at least two communication links.

Optionally, the target data packets each include a communication type identifier, before transmitting the target data packets to the subscriber application via the at least two communication links, the method further includes:
identifying the communication type identifier of each of the target data packets;
in response to the communication type identifier of the target data packet indicating communication based on the DDS-adapted protocol, determining to transmit the target data packets to the subscriber application via the at least two communication links.

In a second aspect, embodiments of the present disclosure provide a multi-channel redundant communication method, including:
transmitting a topic subscription to a target publisher application;
receiving target data packets that are returned, in response to the topic subscription, by the target publisher application via at least two communication links, and deduplicating the target data packets to obtain a single target data packet, wherein the target data packets are obtained, by the target publisher application, through encapsulating service data corresponding to the topic subscription.

Optionally, the target data packets each include multiple target sub-data packets, the deduplicating the target data packets to obtain a single target data packet includes:
decapsulating the target data packets to obtain multiple pieces of sub-service data contained in all the target data packets, wherein the multiple pieces of sub-service data correspond to the target sub-data packets; and
performing comparation among data sequence numbers carried by the multiple pieces of sub-service data that are contained in each of the target data packets, and retaining a single piece of sub-service data among multiple pieces of sub-service data with identical data sequence number to obtain the single target data packet.

Optionally, before transmitting the topic subscription to the target publisher application, the method further includes:
transmitting a dynamic service discovery packet to multiple publisher applications, wherein the dynamic service discovery packet carries the topic subscription and service QoS, and is used to discover the target publisher application corresponding to the subscriber application among the multiple publisher applications.

Optionally, before deduplicating the target data packets, the method further includes:
identifying communication type identifiers of the target data packets;
in response to the communication type identifiers of the data packets indicating communication based on a DDS-adapted protocol, performing deduplication processing on the target data packets.

In a third aspect, embodiments of the present disclosure provide a multi-channel redundant communication apparatus, including:
an acquisition module, configured to, in response to a topic subscription sent by a subscriber application, acquire service data corresponding to the topic subscription and at least two communication links configured based on a DDS-adapted protocol;
a target data packet generation module, configured to encapsulate the service data according to the DDS-adapted protocol to obtain target data packets corresponding to the at least two communication links; and
a transmission module, configured to transmit the target data packets to the subscriber application via the at least two communication links respectively.

In a fourth aspect, embodiments of the present disclosure provide a multi-channel redundant communication apparatus, including:
a topic subscription transmission module, configured to transmit a topic subscription to a target publisher application;
a target data packet acquisition module, configured to receive target data packets returned, in response to the topic subscription, by the target publisher application via at least two communication links, and perform deduplication processing on the target data packets to obtain a single target data packet, wherein the target data packets are obtained, by the target publisher application, through encapsulating service data corresponding to the topic subscription.

In a fifth aspect, embodiments of the present disclosure provide an electronic device, including:
one or more processors;
a storage device for storing one or more programs,
wherein when the one or more programs are executed by the one or more processors, the one or more processors implement the multi-channel redundant communication method described in the first aspect or the second aspect.

In a sixth aspect, embodiments of the present disclosure provide a computer-readable storage medium storing a computer program, that, when executed by a processor, implements the multi-channel redundant communication method described in the first aspect or the second aspect.

The technical solutions provided by the embodiments of the present disclosure have the following advantages compared with the related art.

In the multi-channel redundant communication method provided by the embodiments of the present disclosure, in response to a topic subscription sent by a subscriber application, service data corresponding to the topic subscription and at least two communication links configured based on the DDS-adapted protocol are acquired; the service data are encapsulated according to the DDS-adapted protocol to generate target data packets corresponding to the at least two communication links; and the target data packets are separately transmitted to the subscriber application via the at least two communication links. Accordingly, multiple identical data packets are transmitted to the subscriber through different communication links via the at least two communication links configured under the DDS-adapted protocol, thereby achieving software-level redundant transmission based on the application program. This redundant transmission approach increases the probability that the subscriber receives complete packets, and improves the reliability of data transmission based on the DDS-adapted protocol.

### BRIEF DESCRIPTION OF THE DRAWINGS

The accompanying drawings, which are incorporated in and constitute a part of the specification, illustrate embodiments consistent with the present disclosure and, together with the description, serve to explain the principles of the present disclosure.

In order to describe technical solutions of the embodiments of the present disclosure or the related art more clearly, the accompanying drawings used in the illustration of the embodiments or the related art will be briefly introduced. Apparently, those skilled in the art may obtain other accompanying drawings based on these accompanying drawings without paying any creative effort.
FIG. 1 is a schematic flowchart of a multi-channel redundant communication method provided by an embodiment of the present disclosure;
FIG. 2 is a schematic principle structural diagram of a multi-channel redundant communication method provided by an embodiment of the present disclosure;
FIG. 3 is a schematic flowchart of another multi-channel redundant communication method provided by an embodiment of the present disclosure;
FIG. 4 is a schematic structural diagram of a multi-channel redundant communication apparatus provided by an embodiment of the present disclosure;
FIG. 5 is a schematic structural diagram of another multi-channel redundant communication apparatus provided by an embodiment of the present disclosure; and
FIG. 6 is a schematic structural diagram of an electronic device provided by an embodiment of the present disclosure.

### DETAILED DESCRIPTION

To more clearly understand the above objectives, features and advantages of the present disclosure, the solutions of the present disclosure will be further described below. It should be noted that the embodiments of the present disclosure and the features in the embodiments may be combined with each other without conflict.

Numerous details are set forth in the following description to facilitate a full understanding of the present disclosure, but the present disclosure may also be implemented in other manners different from those described herein. The embodiments described are only part of the embodiments of the present disclosure, rather than all embodiments.

In network communications, communication interruptions caused by single point of failure can be addressed by designing a ring network. However, since the network communication is based on the TSN 802.1CB protocol, this approach requires that all switching devices deployed in the network support the TSN 802.1CB protocol, and additionally necessitates extra hardware for data distribution and reception, which increases the cost of hardware devices. Moreover, the network deployment of the switching devices is relatively complex.

Data Distribution Service (DDS) protocol can be adopted to implement communication. DDS is a data-centric connectivity service that provides real-time, efficient and flexible data distribution while ensuring data integrity, thus meeting the requirements of various distributed real-time communication applications. In DDS-based communication, each application is associated with a single communication link, with M applications transmitting distinct M pieces of data over M respective links. Since only a single copy of data is transmitted under the DDS protocol, any anomaly such as data loss during transmission can result in subscribers failing to receive the complete data, rendering the transmission reliability of the DDS protocol relatively low.

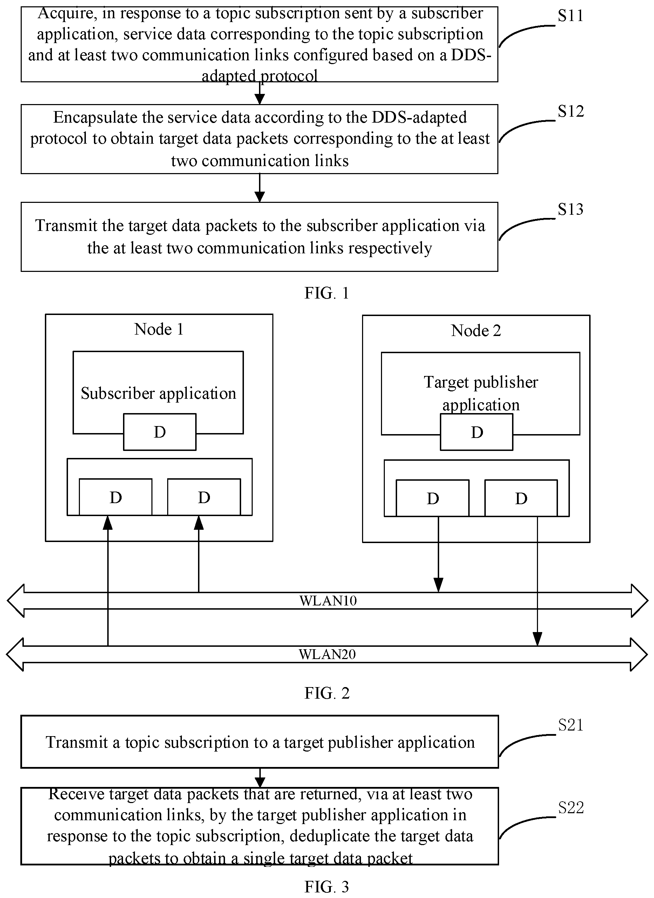

To resolve the above technical problems, an embodiment of the present disclosure provides a multi-channel redundant communication method. FIG. 1 is a schematic flowchart of a multi-channel redundant communication method provided by the embodiment of the present disclosure. As shown in FIG. 1, the multi-channel redundant communication method provided by the embodiment of the present disclosure may be applied to a target publisher application, and includes steps below.

At S11, in response to a topic subscription sent by a subscriber application, service data corresponding to the topic subscription and at least two communication links configured based on a DDS-adapted protocol are acquired.

The target publisher application refers to an application that provides service data corresponding to a topic subscription sent by a subscriber application. The DDS-adapted protocol is a protocol obtained by adjusting the DDS protocol.

At present, the ownership QoS policy of the DDS protocol realizes reliable communication with redundant links by employing multiple publishers to supply multiple data sources for a single subscriber. Such approach requires multiple publishers, such as multiple publisher applications, which increases application complexity and memory consumption. In particular, for resource-constrained controllers such as micro controller units (MCUs), this approach is almost unacceptable. In embodiments of the present application, at least two communication links are configured based on the DDS-adapted protocol, the adaptation is primarily reflected in achieving redundant communication over at least two communication links between a single publisher and a single subscriber. Accordingly, in response to a topic subscription sent by a subscriber application, the target publisher application may transmit to-be-sent data to the subscriber application via each of the at least two communication links. That is, data can be redundantly transmitted over at least two communication links to ensure that at least one copy of data can be reliably delivered to the subscriber application. The subscriber application may then perform deduplication processing on all received data according to a predetermined policy of the DDS-adapted protocol, thereby obtaining data corresponding to the topic subscription.

In some embodiments, in the DDS-adapted protocol, the adaptation to the DDS protocol further includes adding a sequence number parameter to a protocol header of the DDS protocol. That is, the DDS-adapted protocol may include a sequence number parameter that records the data sequence number of service data. Service data is also referred to as Topic.

Exemplarily, the target publisher application may be APP1 on in-vehicle function module 1, and the subscriber application may be APP2 on in-vehicle function module 2. The in-vehicle function module 1 and the in-vehicle function module 2 correspond to two nodes in an in-vehicle network, and the two network nodes are connected through a network composed of multiple routers or switches.

As shown in FIG. 2, a subscriber application runs on Node 1, and a target publisher application runs on Node 2. In response to a topic subscription sent by the subscriber application, Node 2 duplicates to-be-sent data D corresponding to the topic subscription into two copies, and transmits them to the subscriber application via two communication links VLAN10 and VLAN20 between Node 1 and Node 2 respectively. After receiving two copies of data D, the subscriber application performs a deduplication processing to obtain one copy of data D.

Exemplarily, service data corresponding to the topic subscription acquired by the target publisher application in response to the topic subscription from the subscriber application may include control instructions for target vehicle modules, log data, configuration files, multimedia data, etc., so as to achieve intelligent control and interconnection for full-vehicle scenarios, which is not specifically limited herein.

The at least two communication links are used for service data transmission between the target publisher application and the subscriber application. It should be noted that the target publisher application transmits service data corresponding to the topic subscription to the subscriber application via each communication link. Such communication links need to be pre-configured on the target publisher application. To guarantee reliable communication between the target publisher application and the subscriber application, the target publisher application usually supplies service data corresponding to the topic subscription to the subscriber application via two or more communication links.

Specifically, upon receiving a topic subscription sent by the subscriber application, the target publisher application acquires service data corresponding to the topic subscription, parses the pre-configured DDS-adapted protocol, and obtain two or more communication links for transmitting the service data.

Optionally, in some embodiments of the present disclosure, on the basis of the above embodiments, the method further includes step A before S11.

At step A, at least two communication links are pre-configured according to first address information of the target publisher application and second address information of the subscriber application.

The first address information and the second address information are used to determine communication links.

Specifically, the target publisher application pre-configures at least two communication links according to its own first address information and the second address information of the subscriber application.

Optionally, in some embodiments of the present disclosure, different communication links have different source addresses and destination addresses. On this basis, the first address information includes at least two source addresses, e.g., 192.168.10.2 or 192.168.20.2, and the second address information includes at least two destination addresses, e.g., 192.168.10.1 or 192.168.20.1, which are not limited herein and may be set by those skilled in the art according to actual requirements. Step A may be implemented by:

determining destination addresses corresponding to at least two source addresses to obtain the at least two communication links.

Specifically, for the target publisher application, destination addresses corresponding to two or more source addresses are determined, so as to obtain two or more communication links.

Exemplarily, in the above embodiments, the source address 192.168.10.2 corresponds to the destination address 192.168.10.1. Alternatively, the source address 192.168.20.2 corresponds to the destination address 192.168.20.1. However, the present disclosure is not limited thereto and does not impose specific limitations thereon, and those skilled in the art may make configurations according to actual circumstances.

It should be noted that the source addresses and destination addresses are determined based on Virtual Local Area Networks (VLANs). Specifically, a VLAN can divide the same physical local area network into different broadcast domains according to actual application requirements. When the target publisher application broadcasts multiple pieces of service data, in one broadcast domain, the subscriber application actively initiates a topic subscription according to service needs. If the target publisher application can provide the topic subscribed to by the subscriber application, and the Quality of Service (QoS) requirements are satisfied, the subscription in the broadcast domain link is successful. This means that the current publisher application is a publisher application capable of providing the service data corresponding to the topic subscription to the subscriber application. Further, first address information of the target publisher application and second address information of the subscriber application are configured based on VLAN division in two or more communication links.

At S12, the service data is encapsulated according to the DDS-adapted protocol to obtain target data packets corresponding to the at least two communication links.

The target publisher application encapsulates the service data according to the data transmission format requirements of the DDS-adapted protocol to obtain target data packets corresponding to the service data. Since the service data needs to be transmitted via at least two communication links, the target publisher application may encapsulate the service data for at least two communication links to obtain two or more target data packets corresponding to the at least two communication links.

In some embodiments, the service data may be encapsulated by the first Data Distribution Service (DDS) middleware of the target publisher application according to the DDS-adapted protocol, to obtain target data packets corresponding to the at least two communication links. The DDS middleware is a data-centric middleware technology that employs a publish/subscribe model between applications or between systems, and is capable of providing multiple Quality of Service (QoS) policies for data distribution. The target data packets may be understood as encapsulated packets obtained by encapsulating the service data. Multiple target data packets may be obtained, that is, there may be multiple identical copies of the target data packet, and one piece of service data may be encapsulated into multiple identical target data packets. Sub-service data refers to partial data of the service data, and multiple pieces of sub-service data in the service data may cover all data of the service data. A target sub-data packet may be a packet obtained by encapsulating sub-service data.

In some embodiments, the target publisher application may divide the service data into multiple pieces of sub-service data, and encapsulate the multiple pieces of sub-service data according to the DDS-adapted protocol to obtain target data packet each containing multiple target sub-data packets. The multiple pieces of sub-service data and the target sub-data packets are in one-to-one correspondence, and the sequence number parameter records the data sequence number of the sub-service data. The data sequence number is a number assigned to the sub-service data.

Specifically, after the target publisher application has obtained the service data corresponding to the topic subscription as well as two or more communication links for transmitting the service data, the first DDS middleware of the target publisher application divides the service data into multiple pieces of sub-service data according to preset data specifications, and the sub-service data is encapsulated according to the DDS-adapted protocol to complete encapsulation of the service data, where a data sequence number is assigned to each sub-service data, and the data sequence number is recorded via the sequence number parameter in the DDS-adapted protocol. In this way, target sub-data packets that are in one-to-one correspondence with the sub-service data are obtained, i.e., the target data packet corresponding to the service data is obtained. Further, all the communication links transmit the target data packet, so that multiple copies of the target data packet are transmitted to the subscriber application through multiple communication links.

Optionally, in some embodiments of the present disclosure, on the basis of the above embodiments, in order to ensure that the target publisher application transmits, through the first DDS middleware, multiple pieces of service data corresponding to the topic subscription to the subscriber application via two or more communication links, and to ensure the subscriber application can perform deduplication processing after receiving the multiple pieces of service data to prevent the subscriber application from receiving duplicate service data, one implementation of S12 may be step B.

At step B, the first DDS middleware of the target publisher application numbers multiple pieces of sub-service data contained in the service data to be sent via the at least two communication links to obtain data sequence numbers, takes the data sequence numbers as sequence number parameters, take the multiple pieces of sub-service data as payload data in the DDS-adapted protocol, and encapsulation is performed to obtain multiple target sub-data packets corresponding to the multiple pieces of sub-service data.

The payload data refers to the field in the DDS-adapted protocol for recording sub-service data, also referred to as Data, with functions similar to the Data field in the standard DDS protocol.

Specifically, the first DDS middleware of the target publisher application numbers multiple pieces of sub-service data contained in the service data to be sent over two or more communication links, to obtain a data sequence number for each sub-service data. The data sequence number is used as the sequence number parameter in the DDS-adapted protocol, and the sub-service data is used as the payload data in the DDS-adapted protocol. Other data in the DDS-adapted protocol are not limited herein. Then, encapsulation processing is performed on the numbered multiple pieces of sub-service data according to the DDS-adapted protocol, so as to obtain multiple target sub-data packets corresponding to the multiple pieces of sub-service data. In this embodiment, the service data to be sent over one communication link corresponds to multiple pieces of sub-service data, the multiple pieces of sub-service data corresponds to multiple target sub-data packets, and the target data packet includes the multiple target sub-data packets. Thus, by performing encapsulation processing on all the sub-service data, the target data packet corresponding to the communication links is obtained.

Exemplarily, the service data corresponding to a topic subscription includes n pieces of sub-service data, such as Data 1, Data 2, Data 3, Data 4, ..., Data n, the n pieces of sub-service data may be numbered using monotonically increasing sequence numbers. That is, the n pieces of sub-service data, such as Data 1, Data 2, Data 3, Data 4, ..., Data n, are respectively assigned the sequence numbers 1, 2, 3, 4, ..., n. Further, the n pieces of sub-service data carrying the sequence numbers are encapsulated to obtain n target sub-data packets, and the target data packet corresponding to each communication link includes the n target sub-data packets. In another example, the service data corresponding to a topic subscription includes n pieces of sub-service data, such as Data 1, Data 2, Data 3, Data 4, ..., Data n, the n pieces of sub-service data may be numbered using monotonically decreasing sequence numbers. That is, the n pieces of sub-service data, such as Data 1, Data 2, Data 3, Data 4, ..., Data n, are respectively assigned sequence numbers n, n-1, n-2, n-3, ..., 1. Further, the n pieces of sub-service data carrying the sequence numbers are encapsulated to obtain n target sub-data packets, and the target data packet corresponding to each communication link includes the n target sub-data packets. The present disclosure is not limited thereto, those skilled in the art may set this according to actual circumstances. The specific implementation process for encapsulating multiple pieces of sub-service data may refer to the related art and will not be elaborated herein.

Accordingly, in the multi-channel redundant communication method provided by the embodiments of the present disclosure, the multiple pieces of sub-service data in the service data to be sent over the communication links are numbered, allowing the subscriber application to perform deduplication processing, according to the sequence numbers, on the multiple pieces of sub-service data included in the service data when receiving the target data packets. This ensures that at least one copy of the target sub-data packets corresponding to the service data can be normally transmitted to the subscriber application over multiple communication links, so the subscriber application can receive complete service data corresponding to the topic subscription.

At S13, the target data packets are transmitted to the subscriber application via the at least two communication links respectively.

Specifically, after the target data packets being obtained by encapsulating service data to be sent over each of the communication links, the target data packets are transmitted to the subscriber application via each of the communication links, so that the subscriber application can acquire the service data corresponding to the topic subscription.

Exemplarily, one target data packet among the at least two target data packets may be transmitted via each of the at least two communication links, realizing transmission of at least two target data packets to the subscriber application via the at least two communication links respectively.

Alternatively, at least one target data packet among the multiple target data packets may be transmitted via one of the at least two communication links, with at least one target data packet transmitted on each communication link, realizing transmission of multiple target data packets to the subscriber application via the at least two communication links respectively.

In some embodiments, each target data packet transmitted may include multiple target sub-data packets. The specific transmission mode of the multiple target sub-data packets in the network may be determined according to the protocol stack of the network middleware, which is not limited herein.

In the multi-channel redundant communication method provided by embodiments of the present disclosure, in response to a topic subscription sent by a subscriber application, service data corresponding to the topic subscription and at least two communication links configured based on the DDS-adapted protocol are acquired, where the DDS-adapted protocol includes sequence number parameters. The first DDS middleware of the target publisher application encapsulates, according to the DDS-adapted protocol, multiple pieces of sub-service data divided from the service data to be sent over the at least two communication links, to obtain target data packets corresponding to the at least two communication links, where each of the target data packet contains multiple target sub-data packets, the pieces of sub-service data and the target sub-data packets are in a one-to-one correspondence, and the sequence number parameter records the data sequence number of each sub-service data. The target data packets are transmitted to the subscriber application via the at least two communication links, so that the subscriber application may perform deduplication processing on the target data packets based on the data sequence numbers to obtain a single target data packet. In the above process, there exists two types of applications: publisher application and subscriber application. After the subscriber receives a topic subscription, it identifies corresponding service data and multiple communication links, divides the service data into multiple pieces of sub-service data each assigned a unique data sequence number recorded in the sequence number parameter of the DDS-adapted protocol, packages the service data according to the DDS-adapted protocol to generate target data packets containing multiple target sub-data packets, and transmits the target data packets to the subscriber via multiple communication links. The subscriber deduplicates multiple target data packets based on sequence numbers to obtain a single target data packet. Therefore, multiple identical packets are transmitted over different communication links via at least two communication links configured in the DDS-adapted protocol and deduplicated by the subscriber to restore one complete packet, realizing software-based redundant transmission at the application layer. Such redundant transmission improves the probability that the subscriber receives complete data packets and enhances the reliability of data transmission under the DDS-adapted protocol.

In addition, in the embodiments of the present disclosure, the target publisher application enables transmission of multiple target data packets to the subscriber application through different communication links, and the subscriber application enables reception of the multiple target data packets, thereby avoiding the need for additional hardware for distributing and receiving packets, avoiding increased hardware costs, and reducing the complexity of network deployment.

Optionally, the service data is divided into multiple pieces of sub-service data by the target publisher application through operations of:
determining first sub-service data in the service data according to a target service type; dividing the service data into multiple pieces of sub-service data including the first sub-service data and second sub-service data, where the second sub-service data includes data in the service data other than the first sub-service data.

The target service type may be a predefined service type. Exemplarily, the target service type may include a service type corresponding to a data portion in the service data that requires highly reliable transmission. For example, the target service type may include a control instruction type, or may be defined as other types according to actual needs, which are not specifically limited herein.

Therefore, data portions requiring highly reliable transmission in the service data are classified as first sub-service data, and other data portions are classified as second sub-service data. Different transmission strategies may be adopted according to different reliability requirements, balancing transmission reliability and network bandwidth occupation.

Accordingly, multiple first target sub-data packets are obtained by encapsulating multiple pieces of first sub-service data, and a second target sub-data packet is obtained by encapsulating the second sub-service data. Multiple first target sub-data packets are transmitted to the subscriber application respectively via each of the at least two communication links; the second target sub-data packet is transmitted to the subscriber application via only one of the at least two communication links.

Exemplarily, one first target sub-data packet among at least two first target sub-data packets may be transmitted via each of the at least two communication links, so that the at least two first target sub-data packets are respectively transmitted to the subscriber application via the at least two communication links.

Alternatively, at least one first target sub-data packet among multiple first target sub-data packets may be transmitted via one of the at least two communication links, with at least one first target sub-data packet being transmitted on each communication link, so that the first target sub-data packets are respectively transmitted to the subscriber application via the at least two communication links.

It can be seen that by transmitting the first target sub-data packets to the subscriber application via each of the at least two communication links respectively, the reliability of transmission for the data portion of the important service type can be achieved, while the target sub-data packet corresponding to the second service sub-data is transmitted to the subscriber application via one of the at least two communication links, thereby reducing the occupation of network bandwidth and improving network resource utilization.

Optionally, before transmitting the multiple target data packets to the subscriber application via the at least two communication links respectively, a communication type identifier of the target data packets may also be identified. In a case where the communication type identifier of the target data packets indicates that communication is performed based on the DDS-adapted protocol, it is determined to transmit the multiple target data packets to the subscriber application via the at least two communication links.

Here, in order to mark the communication type of the data packet to be sent so that the subscriber application at the receiving end can perform corresponding communication protocol processing, before transmitting the data packet, the data packet to be sent, such as the target data packet, may first be identified for its communication type identifier. In some embodiments, the communication type identifier is used to characterize the communication protocol type corresponding to the data packet. Exemplarily, the communication type identifier may include a feature word or a preset value of a preset field. For example, a communication type field may be added to the data parameters in the DDS-adapted protocol, where a communication type field value of 1 indicates that communication is performed based on the DDS-adapted protocol, and a communication type field value of 0 indicates that communication is performed based on other protocols. In this way, the target publisher application may, upon identifying that the communication type identifier of the target data packet indicates that communication is performed based on the DDS-adapted protocol, determine to transmit the target data packet via the at least two communication links configured based on the DDS-adapted protocol.

It should be noted that the communication type identifier may be included in the service data corresponding to the topic subscription acquired by the target publisher application, or may be written into a preset field of the target data packet when encapsulating the service data. That is, before acquiring the service data corresponding to the topic subscription in response to the topic subscription sent by the subscriber application, the communication type identifier may be marked on the service data that needs to be sent via the DDS-adapted protocol, such as vehicle control instruction data, by writing into the service data that needs to be sent via the DDS-adapted protocol a communication type identifier indicating that communication is performed based on the DDS-adapted protocol, so that the target data packet obtained by encapsulating the service data also contains the communication type identifier. Alternatively, when encapsulating the service data according to the DDS-adapted protocol to obtain the target data packet, the communication type identifier indicating that communication is performed based on the DDS-adapted protocol may be written into a preset field of the target data packet. In this way, before transmitting the target data packet, it can be determined, by identifying the communication type identifier contained therein, to transmit the target data packet via the at least two communication links configured based on the DDS-adapted protocol.

FIG. 3 is a schematic flowchart of another multi-channel redundant communication method provided by an embodiment of the present disclosure. As shown in FIG. 3, the multi-channel redundant communication method provided by embodiments of the present disclosure may be applied to a subscriber application, and includes steps below.

At S21, a topic subscription is transmitted to a target publisher application.

Specifically, the subscriber application transmits a topic subscription to the target publisher application to acquire service data corresponding to the topic subscription.

Optionally, in some embodiments of the present application, the subscriber application may transmit the topic subscription to the target publisher application by broadcasting the topic subscription over a local area network, which is not limited herein and may be set by those skilled in the art as required.

At S22, multiple target data packets returned, in response to the topic subscription, by the target publisher application via at least two communication links are received, and a deduplication processing is performed on the multiple target data packets to obtain a single target data packet.

The target data packets are obtained, by the target publisher application, through encapsulating the service data corresponding to the topic subscription.

Specifically, in response to the topic subscription, the target publisher application returns one copy of the target data packet via each communication link respectively, that is, returning multiple identical copies of the target data packet to the subscriber application via the at least two communication links. After receiving the multiple target data packets sent by the target publisher application, the second Data Distribution Service (DDS) middleware of the subscriber application performs deduplication processing on the multiple target data packets, thereby obtaining a single target data packet.

Optionally, during the process of the above embodiments, in some embodiments of the present disclosure, the target data packet includes multiple target sub-data packets, and S22 may be implemented by steps below.

At step C1, the multiple target data packets are decapsulated to obtain multiple pieces of sub-service data contained in each target data packet. The multiple pieces of sub-service data correspond to the target sub-data packets.

Specifically, after receiving the multiple target data packets sent by the target publisher application, the second DDS middleware of the subscriber application decapsulates the target sub-data packets included in each target data packet according to the DDS-adapted protocol, extracts the sub-service data according to the payload data in the DDS-adapted protocol, and extracts the data sequence numbers according to the sequence number parameters in the DDS-adapted protocol, so as to obtain multiple pieces of sub-service data corresponding to the target sub-data packets.

At step C2, a comparation is performed among data sequence numbers carried by the multiple pieces of sub-service data that are contained in each of the target data packets, and among multiple pieces of sub-service data with identical data sequence number, a single piece of sub-service data is retained to obtain a single target data packet.

Specifically, the second DDS middleware of the subscriber application performs comparation according to the data sequence numbers carried by multiple pieces of sub-service data contained in different target data packets, among the multiple pieces of sub-service data with identical data sequence number, deletes multiple pieces of sub-service data with a single piece of sub-service data being retained. Further, a target data packet is obtained according to multiple pieces of sub-service data with non-repetitive data sequence numbers.

Exemplarily, assuming there are two target data packets, namely target data packet 1 and target data packet 2, target data packet 1 includes target sub-data packet 1, target sub-data packet 2, target sub-data packet 3, target sub-data packet 4, ..., target sub-data packet n; target data packet 2 includes target sub-data packet 1, target sub-data packet 2, target sub-data packet 3, target sub-data packet 4, ..., target sub-data packet n. Decapsulation processing is performed on target data packet 1 and target data packet 2 to obtain, for each of target data packet 1 and target data packet 2, multiple pieces of sub-service data carrying data sequence numbers. For example, target data packet 1 carries n pieces of sub-service data with data sequence numbers such as: data 1, data 2, data 3, data 4, ..., data n, and target data packet 2 carries n pieces of sub-service data with data sequence numbers such as: data 1, data 2, data 3, data 4, ..., data n. According to the data sequence numbers carried by the n pieces of sub-service data contained in target data packet 1 being 1, 2, 3, 4, ..., n, and the data sequence numbers carried by the n pieces of sub-service data contained in target data packet 2 being 1, 2, 3, 4, ..., n, matching is performed to determine that the same data numbers 1, 2, 3, 4, ..., n exist. Then, among the data 1, data 2, data 3, data 4, ..., data n corresponding to the same data sequence numbers 1, 2, 3, 4, ..., n, most data are deleted with one copy of data 1, data 2, data 3, data 4, ..., data n being retained, thereby obtaining one target data packet according to data 1, data 2, data 3, data 4, ..., data n. However, the present disclosure is not limited thereto and does not impose specific limitations thereon, and those skilled in the art may make configurations according to actual circumstances.

Thus, in the multi-channel redundant communication method provided by the embodiments of the present disclosure, a topic subscription is sent to a target publisher application; through the second DDS middleware of the subscriber application, multiple target data packets returned, in response to the topic subscription, by the target publisher application via at least two communication links are received, and deduplication processing is performed on the multiple target data packets to obtain a single target data packet; wherein the target data packets are obtained, by the target publisher application, through encapsulating service data corresponding to the topic subscription. In the above process, the topic subscription is sent to the publisher, so that the packets obtained by encapsulating the service data are transmitted to the subscriber via multiple communication links, and multiple identical packets are transmitted through different communication links, thereby improving, by means of redundant transmission, the probability that the subscriber receives complete packets, and improving the reliability of data transmission based on the DDS-adapted protocol.

In addition, in the embodiments of the present disclosure, the target publisher application enables transmission of multiple target data packets to the subscriber application through different communication links, and the subscriber application enables reception of the multiple target data packets, thereby avoiding the need for additional hardware for distributing and receiving packets, avoiding increased hardware costs, and reducing the complexity of network deployment.

Optionally, during the process of the above embodiments, in some embodiments of the present disclosure, the method further includes the following step before S21:
transmitting a dynamic service discovery packet to multiple publisher applications.

The dynamic service discovery packet includes the topic subscription and service QoS (quality of service), and the dynamic service discovery packet is used for discovering, among the publisher applications, a target publisher application corresponding to the subscriber application.

Specifically, the subscriber application transmits the dynamic service discovery packet to the publisher applications. The dynamic service discovery packet includes the topic subscription and the service QoS, and is matched with the service data corresponding to the topic subscription and the service QoS broadcast by the publisher applications, so as to determine the target publisher application corresponding to the subscriber application.

Optionally, the dynamic service discovery packet may be transmitted to the multiple publisher applications by broadcasting the dynamic service discovery packet over a local area network, but the present disclosure is not limited thereto and does not impose specific limitations thereon, and those skilled in the art may make configurations according to actual circumstances.

Thus, in the multi-channel redundant communication method provided by the embodiments of the present disclosure, the corresponding target publisher application can be determined among the multiple publisher applications according to the dynamic service discovery packet, facilitating the subsequent construction of communication links.

Optionally, before performing the above deduplication processing on the multiple target data packets, a communication type identifier corresponding to the multiple target data packets may be identified. In a case where the communication type identifier corresponding to the multiple data packets indicates that communication is performed based on the DDS-adapted protocol, it is determined to perform deduplication processing on the multiple target data packets.

Relative to the embodiments on the target publisher application side, the target data packet may include a communication type identifier, and the communication type identifier is used to characterize whether the target data packet is communicated based on the DDS-adapted protocol. In a case where the communication type identifier corresponding to the multiple data packets indicates that communication is performed based on the DDS-adapted protocol, it indicates that the multiple data packets are redundantly transmitted through at least two communication links by means of the method in the embodiments of the present disclosure. The subscriber application may perform deduplication processing on the multiple target data packets.

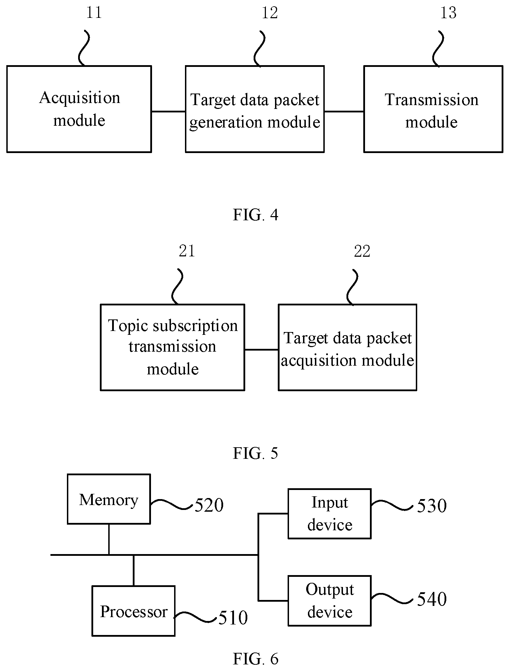

FIG. 4 is a schematic structural diagram of a multi-channel redundant communication apparatus provided by an embodiment of the present disclosure, applied to a target publisher application. As shown in FIG. 4, the multi-channel redundant communication apparatus includes an acquisition module 11, a target data packet generation module 12 and a transmission module 13.

The acquisition module 11 is configured to, in response to a topic subscription sent by a subscriber application, acquire service data corresponding to the topic subscription and at least two communication links configured based on a DDS-adapted protocol.

The target data packet generation module 12 is configured to encapsulate the service data according to the DDS-adapted protocol to obtain target data packets corresponding to at least two communication links.

The transmission module 13 is configured to transmit multiple target data packets to the subscriber application via the at least two communication links respectively.

Optionally, the target data packets each include multiple target sub-data packets. The target data packet generation module 12 is further configured to divide the service data into multiple pieces of sub-service data, and encapsulate the multiple pieces of sub-service data according to the DDS-adapted protocol to obtain target data packets each containing multiple target sub-data packets. The multiple pieces of sub-service data and the target sub-data packets are in a one-to-one correspondence.

Optionally, the target data packet generation module 12 is further configured to number multiple pieces of sub-service data contained in the service data to generate data sequence numbers, take the data sequence numbers as sequence number parameters and take the pieces of sub-service data as payload data in the DDS-adapted protocol, and perform encapsulation to generate multiple target sub-data packets corresponding to the multiple pieces of sub-service data.

Optionally, the apparatus further includes a communication link configuration module configured to pre-configure at least two communication links according to first address information of the target publisher application and second address information of the subscriber application.

Optionally, the first address information includes at least two source addresses, and the second address information includes at least two destination addresses. The communication link configuration module is specifically configured to determine destination addresses corresponding to the at least two source addresses to obtain the at least two communication links.

Optionally, the target data packet generation module 12 is further configured to identify first sub-service data in the service data according to a target service type, and divide the service data into multiple pieces of sub-service data including the first sub-service data and second sub-service data, where the second sub-service data includes all data in the service data other than the first sub-service data.

Optionally, the transmission module 13 is further configured to transmit first target sub-data packets corresponding to multiple first pieces of sub-service data to the subscriber application respectively via each of the at least two communication links, and transmit a second target sub-data packet corresponding to the second sub-service data via one of the at least two communication links to the subscriber application.

Optionally, before transmitting multiple target data packets to the subscriber application respectively via the at least two communication links, the target data packet generation module 12 is further configured to identify the communication type identifier of each target data packet; when the communication type identifier of a target data packet indicates communication based on the DDS-adapted protocol, determine to transmit the multiple target data packets to the subscriber application via the at least two communication links.

FIG. 5 is a schematic structural diagram of another multi-channel redundant communication apparatus provided by an embodiment of the present disclosure, applied to a subscriber application. As shown in FIG. 5, the multi-channel redundant communication apparatus includes a topic subscription transmission module 21 and a target data packet acquisition module 22.

The topic subscription transmission module 21 is configured to transmit a topic subscription to a target publisher application;
The target data packet acquisition module 22 is configured to receive multiple target data packets returned, in response to the topic subscription, by the target publisher application via at least two communication links, and perform deduplication processing on the multiple target data packets to obtain a single target data packet. The target data packets are obtained, by the target publisher application, through encapsulating service data corresponding to the topic subscription.

Optionally, each target data packet includes multiple target sub-data packets. The target data packet acquisition module 22 is further configured to: decapsulate the multiple target data packets to obtain multiple pieces of sub-service data contained in each of the target data packets, where the multiple pieces of sub-service data corresponds to the target sub-data packets; perform comparation among data sequence numbers carried by the multiple pieces of sub-service data that are contained in each of the target data packets, and retain a single piece of sub-service data among multiple pieces of sub-service data with identical data sequence number to obtain the single target data packet.

Optionally, the apparatus further includes a dynamic service discovery packet transmission module configured to broadcast dynamic service discovery packets to multiple publisher applications. Each dynamic service discovery packet carries the topic subscription and service QoS, and is used to discover the target publisher application corresponding to the subscriber application among the multiple publisher applications.

Optionally, before deduplicating the multiple target data packets, the target data packet acquisition module 22 is further configured to identify communication type identifiers of the multiple target data packets; when the communication type identifiers of the multiple data packets indicate communication based on the DDS-adapted protocol, perform deduplication processing on the multiple target data packets.

It should be noted that the modules and units included in the above apparatus embodiments are divided merely according to logical functions, and the present disclosure is not limited to such division as long as corresponding functions can be realized. In addition, the specific names of each functional unit are only for distinguishing purposes and shall not limit the protection scope of the present disclosure.

The multi-channel redundant communication apparatus provided by embodiments of the present disclosure can execute the multi-channel redundant communication method of any embodiment of the present disclosure, with functional modules and beneficial effects corresponding to the method.

FIG. 6 is a schematic structural diagram of an electronic device provided by an embodiment of the present disclosure. As shown in FIG. 6, the electronic device includes a processor 510, a memory 520, an input device 530 and an output device 540. The number of processors in the electronic device may be one or more, and one processor 510 is illustrated in FIG. 6 as an example. The processor 510, memory 520, input device 530 and output device 540 of the electronic device may be connected via a bus or other means, with bus connection shown in FIG. 6 as an example.

As a computer-readable storage medium, the memory 520 may store software programs, computer-executable programs and modules, such as program instructions/modules corresponding to the methods of embodiments of the present disclosure. The processor 510 executes software programs, instructions and modules stored in the memory 520 to perform various functional applications and data processing of the computer device, i.e., implement the methods provided by embodiments of the present disclosure.

The memory 520 mainly includes a program storage area and a data storage area. The program storage area may store an operating system and at least one application program required for a function; the data storage area may store data created according to use of the terminal, etc. In addition, the memory 520 may include a high-speed random access memory, and may further include non-volatile memory such as at least one magnetic disk storage device, flash memory device or other non-volatile solid-state storage devices. In some examples, the memory 520 may further include memory remotely disposed relative to the processor 510, and such remote memory may be connected to the computer device via a network. Examples of such networks include but are not limited to the Internet, enterprise intranets, local area networks, mobile communication networks and combinations thereof.

The input device 530 may receive input digital or character information, and generate key signal input related to user settings and function control of the electronic device, and may include a keyboard, a mouse, etc. The output device 540 may include a display screen or other display equipment.

Embodiments of the present disclosure further provide a computer-readable storage medium containing computer-executable instructions, where the computer-executable instructions, when executed by a computer processor, implement the methods provided by embodiments of the present disclosure.

Naturally, the computer-executable instructions contained in the computer-readable storage medium provided by embodiments of the present disclosure are not limited to the operations of the above methods, and may also execute related operations of the methods of any embodiment of the present disclosure.

Through the above description of embodiments, those skilled in the art may clearly understand that the present disclosure may be implemented by software plus necessary general-purpose hardware, or purely by hardware. In most cases, the former is a preferred implementation mode. Based on such understanding, the technical solution of the present disclosure, or the part contributing to the prior art, may be embodied in the form of a computer software product stored in a computer-readable storage medium such as a computer floppy disk, Read-Only Memory (ROM), Random Access Memory (RAM), flash memory, hard disk or optical disk, containing several instructions for enabling a computer device (personal computer, server, network device, etc.) to execute the methods of each embodiment of the present disclosure.

It should be noted that relational terms such as "first" and "second" are used merely to distinguish one entity or operation from another, and do not necessarily imply any actual relationship or order between such entities or operations. Moreover, the terms "include", "comprise" or any other variant thereof cover non-exclusive inclusion, such that a process, method, article or apparatus including a series of elements includes not only those elements but also other elements not explicitly listed or elements inherent to such process, method, article or apparatus. Without further limitations, an element defined by the phrase "including one ..." does not exclude the presence of additional identical elements in the process, method, article or apparatus containing the element.

The above are merely specific embodiments of the present disclosure to enable those skilled in the art to understand or implement the present disclosure. Various modifications to these embodiments will be readily apparent to those skilled in the art, and the general principles defined herein may be implemented in other embodiments without departing from the spirit or scope of the present disclosure. Therefore, the present disclosure shall not be limited to the embodiments described herein, but shall conform to the widest scope consistent with the principles and novel features disclosed herein.

### Industrial Applicability

The present application achieves, through at least two communication links configured in the DDS-adapted protocol and sequence number parameters in the DDS-adapted protocol, transmission of multiple identical data packets via different communication links and deduplication of the multiple identical data packets so that the subscriber obtains one data packet, thereby implementing application-level software-based redundant transmission. This redundant transmission approach increases the probability that the subscriber receives complete packets, and improves the reliability of data transmission based on the DDS-adapted protocol.

## Claims

1. A multi-channel redundant communication method, comprising:
in response to a topic subscription sent by a subscriber application, acquiring service data corresponding to the topic subscription and at least two communication links configured based on a DDS-adapted protocol;
encapsulating the service data according to the DDS-adapted protocol to obtain target data packets corresponding to the at least two communication links; and
transmitting the target data packets to the subscriber application via the at least two communication links respectively.

2. The method according to claim 1, wherein the target data packets each comprise multiple target sub-data packets, the encapsulating the service data according to the DDS-adapted protocol to obtain target data packets corresponding to the at least two communication links comprises:
dividing the service data into multiple pieces of sub-service data; and
encapsulating the multiple pieces of sub-service data according to the DDS-adapted protocol to obtain the target data packets each comprising the multiple target sub-data packets, wherein the multiple pieces of sub-service data and the target sub-data packets are in one-to-one correspondence.

3. The method according to claim 2, wherein the DDS-adapted protocol comprises sequence number parameters; the encapsulating the multiple pieces of sub-service data according to the DDS-adapted protocol to obtain the target data packets each comprising the multiple target sub-data packets comprises:
numbering the multiple pieces of sub-service data to obtain data sequence numbers, taking the data sequence numbers as the sequence number parameters, taking the multiple pieces of sub-service data as payload data in the DDS-adapted protocol, and performing encapsulation to obtain the multiple target sub-data packets corresponding to the multiple pieces of sub-service data.

4. The method according to any one of claims 1 to 3, wherein the at least two communication links are pre-configured according to first address information of a target publisher application and second address information of the subscriber application before the topic subscription is received from the subscriber application.

5. The method according to claim 4, wherein the first address information comprises at least two source addresses, and the second address information comprises at least two destination addresses;
the at least two communication links is pre-configured according to the first address information of the target publisher application and the second address information of the subscriber application by:
determining destination addresses corresponding to the at least two source addresses to obtain the at least two communication links.

6. The method according to claim 2, wherein the dividing the service data into the multiple pieces of sub-service data comprises:
determining first sub-service data in the service data according to a target service type; and
dividing the service data into multiple pieces of sub-service data, wherein the sub-service data comprises the first sub-service data and second sub-service data, the second sub-service data comprises data in the service data other than the first sub-service data.

7. The method according to claim 6, wherein the transmitting the target data packets to the subscriber application via the at least two communication links respectively comprises:
transmitting multiple first target sub-data packets corresponding to multiple pieces of first sub-service data to the subscriber application respectively via all of the at least two communication links; and
transmitting a second target sub-data packet corresponding to the second sub-service data to the subscriber application via one of the at least two communication links.

8. The method according to any one of claims 1 to 7, wherein the target data packets each comprise a communication type identifier, before transmitting the target data packets to the subscriber application via the at least two communication links, the method further comprises:
identifying the communication type identifier of each of the target data packets;
in response to the communication type identifier of the target data packet indicating communication based on the DDS-adapted protocol, determining to transmit the target data packets to the subscriber application via the at least two communication links.

9. A multi-channel redundant communication method, comprising:
transmitting a topic subscription to a target publisher application;
receiving target data packets that are returned, in response to the topic subscription, by the target publisher application via at least two communication links, and deduplicating the target data packets to obtain a single target data packet, wherein the target data packets are obtained, by the target publisher application, through encapsulating service data corresponding to the topic subscription.

10. The method according to claim 9, wherein the target data packets each comprise multiple target sub-data packets, the deduplicating the target data packets to obtain a single target data packet comprises:
decapsulating the target data packets to obtain multiple pieces of sub-service data contained in all the target data packets, wherein the multiple pieces of sub-service data correspond to the target sub-data packets; and
performing comparation among data sequence numbers carried by the multiple pieces of sub-service data that are contained in each of the target data packets, and retaining a single piece of sub-service data among multiple pieces of sub-service data with identical data sequence number to obtain the single target data packet.

11. The method according to claim 9 or 10, wherein before transmitting the topic subscription to the target publisher application, the method further comprises:
transmitting a dynamic service discovery packet to multiple publisher applications, wherein the dynamic service discovery packet carries the topic subscription and service QoS, and is used to discover the target publisher application corresponding to the subscriber application among the multiple publisher applications.

12. The method according to any one of claims 9 to 11, wherein before deduplicating the target data packets, the method further comprises:
identifying communication type identifiers of the target data packets;
in response to the communication type identifiers of the data packets indicating communication based on a DDS-adapted protocol, performing deduplication processing on the target data packets.

13. A multi-channel redundant communication apparatus, comprising:
an acquisition module, configured to, in response to a topic subscription sent by a subscriber application, acquire service data corresponding to the topic subscription and at least two communication links configured based on a DDS-adapted protocol;
a target data packet generation module, configured to encapsulate the service data according to the DDS-adapted protocol to obtain target data packets corresponding to the at least two communication links; and
a transmission module, configured to transmit the target data packets to the subscriber application via the at least two communication links respectively.

14. A multi-channel redundant communication apparatus, comprising:
a topic subscription transmission module, configured to transmit a topic subscription to a target publisher application;
a target data packet acquisition module, configured to receive target data packets returned, in response to the topic subscription, by the target publisher application via at least two communication links, and perform deduplication processing on the target data packets to obtain a single target data packet, wherein the target data packets are obtained, by the target publisher application, through encapsulating service data corresponding to the topic subscription.

15. An electronic device, comprising:
one or more processors;
a storage device for storing one or more programs,
wherein when the one or more programs are executed by the one or more processors, the one or more processors implement the multi-channel redundant communication method according to any one of claims 1 to 8, or the multi-channel redundant communication method according to any one of claims 9 to 12.

16. A computer-readable storage medium storing a computer program, that, when executed by a processor, implements the multi-channel redundant communication method according to any one of claims 1 to 8, or the multi-channel redundant communication method according to any one of claims 9 to 12.
